# EUROPÄISCHE PATENTANMELDUNG

(11) **EP 1 468 792 A2**
(43) Veröffentlichungstag der Anmeldung: **20.10.2004**
(21) Anmeldenummer: 04008832.0
(22) Anmeldetag: 14.04.2004
(51) Int. Cl.: B25J 9/16, G01B 21/04

(54) **Verfahren zum Kalibrieren eines Roboters**

(30) Priorität: 16.04.2003 DE 10317846
(71) Anmelder: VMT Bildverarbeitungssysteme GmbH, 69469 Weinheim (DE)
(72) Erfinder: Grab, Thomas, Dipl.-Inf. (FH), 74933 Neidenstein (DE)
(74) Vertreter: Mierswa, Klaus

(57) **Zusammenfassung**

Die Erfindung betrifft ein Verfahren zur Einmessung eines Kamera-Koordinatensystems (KKS) gegenüber einem Roboter-Koordinatensystem (RKS) oder umgekehrt, wobei am Roboter ein Werkzeughalter angeordnet ist, dessen Lage und Orientierung im RKS abfragbar sind. Am Werkzeughalter wird ein Kalibrierkörper angeordnet und auf oder in diesem ein Referenzpunkt gewählt, dessen Lage bezüglich des Werkzeughalters bestimmt und als Zwischenergebnis gespeichert wird. Der Referenzpunkt fährt mindestens drei Aufpunkte an. Nach Erreichen jedes Aufpunktes werden Lage und Orientierung des Werkzeughalters im RKS abgefragt, hieraus und dem Zwischenergebnis die Lage des Referenzpunktes und damit diejenige des Aufpunktes im RKS ermittelt, und der Kalibrierkörper durch die Kamera abgebildet. Aus Lage und Form der Bilder des Kalibrierkörpers folgt die Lage des Referenzpunktes in der Bildebene der Kamera. Hieraus sowie aus der Lage der Aufpunkte im RKS folgt die Lage der Aufpunkte im KKS. Durch Vergleich dieser Lagen in beiden Koordinatensystemen folgen Lage und Orientierung des RKS im KKS oder umgekehrt.

## Beschreibung

### Technisches Gebiet:

Die Erfindung betrifft ein Verfahren zur genauen Einmessung eines Kamera-Koordinatensystems einer Kamera gegenüber einem Roboter-Koordinatensystem eines Roboters, oder umgekehrt.

### Stand der Technik:

Um eine Lagererkennung oder z.B. eine 3D-Vermessung für die Steuerung eines Roboters durchführen zu können, damit dieser Teile korrekt aufnehmen, bearbeiten und/oder platzieren kann, muss man sich eines Hilfsmittels für den Roboter bedienen, zum Beispiel optischer Sensoren, wie Videokameras. Mit Hilfe einer Kamerasoftware kann dann der Roboter in seinen Positionen, in Abhängigkeit der durch die Kamera erkannten Objektlage, korrigiert oder z.B. an die richtige Aufnahmestelle delegiert werden. Hierzu muss die Software des Bildverarbeitungssystems die Position der Kamera in Bezug zum Koordinatensystem des Roboters kennen. Die Herstellung des Bezugs bzw. die Übereinanderlegung der Koordinatensysteme der Kamera und desjenigen des Roboters wird Kamerakalibrierung genannt. Im folgenden wird das Koordinatensystem des Roboters als Roboter-Koordinatensystem und dasjenige der Kamera als Kamera-Koordinatensystem bezeichnet.

Die berührungslose und schnelle Lageerkennung oder 3D-Vermessung eines Objektes, z.B. eines dreidimensionalen Körpers, besitzt eine Schlüsselfunktion auf dem Weg zu höherer Automatisierung und zur vollständigen Qualitätssteuerung und Qualitätsüberwachung in vielen Fertigungsprozessen, weil sie die genaue Kenntnis der Position von Objekten im Raum und deren Lage relativ zueinander liefert. In der industriellen Produktion kommt der schnellen und berührungslosen Lageerkennung und Formerfassung, insbesondere der 3D-Positions- und 3D-Formerfassung im Raum, große Bedeutung zu, zum Beispiel für die Maßhaltigkeitskontrolle, die Vollständigkeitsprüfung, Robotersichtführung in der automatischen Montage, Prüfung von Oberflächen, Reverse-Engineering, Überwachung von Sicherheitszonen, 3D-Navigation im Raum. Die 3D-Formerfassung kann z.B. die Positionen von Objekten liefern, die unabhängig vom Oberflächenzustand, von der Entfernung, Drehung und Beleuchtung sind, das heißt, sie sind rotations-, verschiebungs- und beleuchtungsinvariant.

Hierzu werden zur Kalibrierung von elektronischen stationären Kameras Verfahren eingesetzt, die sich mit der Auswertung von bekannten Merkmalen im Kamerabild befassen, wobei alle bekannten Verfahren auf dem Modell der Lochkamera aufsetzen. Parameter sind die optimale Brennweite, die Position der Lichteintrittsöffnung im Raum und Linsenverzeichnungsparameter sowie Parameter, die sich mit der Position des CCD-Chips im Bezug zum Lochkoordinatensystem befassen. In den Kamerabildern versucht man, über die Betrachtung von Kalibrierkörpern oder Kalibrierplatten die Parameter der Kameramodelle zu ermitteln.

Durch die EP 0 763 406 A1 ist ein Verfahren zum Bestimmen der Lage eines Körpers im Raum bekannt geworden, um Manipulationen an diesem durchzuführen, mit mindestens drei räumlich getrennten elektronischen Kameras mit Bildverarbeitung. Jede der Kameras nimmt bei deren Einmessung eine ihr zugeordnete Kalibriertafel mit Punktmuster auf, deren Bilder sowie das Punktmuster zur Bestimmung der Lage der einzelnen Kamera im Raum verarbeitet und deren Lage gespeichert werden. Eine Vermessung der Kalibriertafeln zueinander erfolgt hiervon getrennt, wobei diese Werte ebenfalls gespeichert werden. Anschließend wird der zu vermessende Körper in den Raum zwischen den elektronischen Kameras verbracht. Je ein charakteristischer Punkt auf dem in den Raum verbrachten Körper wird in je einer diesem zugeordneten elektronischen Kamera abgebildet, so dass dessen Lage in Bild mit seiner konstruktiven vorgegebenen Position des charakteristischen Punktes auf den in den Raum verbrachten Körper zusammen mit den gespeicherten Werten verarbeitet wird; alle derart verarbeiteten Werte charakterisieren die Lage des in dem Raum verbrachten Körpers in den sechs räumlichen Freiheitsgraden. Nachteilig an diesem Verfahren ist prinzipiell, dass zum Bestimmen der Lage eines Körpers im Raum Kalibriertafeln verwendet werden, welche sorgfältig gehandhabt werden müssen und nicht beschädigt werden dürfen wie sie auch Lagerplatz benötigen. Der wesentliche Nachteil ist, dass die Kalibriertafeln mit einem großen Aufwand mechanisch im Sichtfeld der Kameras positioniert werden müssen und die Positionierbarkeit äußerst wiederholgenau sein muss. Diese Reproduzierbarkeit der Positionierung zu gewährleisten ist oft mit erheblichen Kosten verbunden, da die räumlichen Verhältnisse zum Beispiel in der Fördertechnik häufig schwierig sind.

Zur Vermeidung der Verwendung von Kalibriertafeln ist durch die DE 100 16 963 A1 ein Verfahren zur Bestimmung der Position eines Werkstücks und der Position von Merkmalen des Werkstücks im 3D-Raum unter Verwendung von mindestens drei elektronischen Kameras und digitaler Bildverarbeitung bekannt geworden, bei welchem die Kameras auf ein gemeinsames Weltkoordinatensystem kalibriert werden und anschließend das Werkstück in den Raum zwischen den Kameras verbracht wird. Für die Lagebestimmung von Objekten für einen Objekt-Typ werden somit wenigstens drei stationäre Kameras oder andere geeignete Sensoren eingesetzt. Aus den 2-dimensionalen Abbildern von Objekt-Merkmalen und der Kenntnis der Lage dieser Merkmale in einem gemeinsamen Koordinatensystem und der Kenntnis der Position der Kameras im Raum, wird die 3dimensionale Positionsverschiebung des Objekts gegenüber einer einmalig eingelernten Nullposition berechnet. Damit werden Manipulatoren, zum Beispiel Roboter, in ihrer Position korrigiert bzw. gesteuert, um am Objekt lagerichtig Manipulationen vornehmen zu können.

### Technische Aufgabe:

Der Erfindung liegt die Aufgabe zugrunde, ein Verfahren zur Kalibrierung zwischen mindestens einer elektronischen Kamera mit digitaler Bildverarbeitung und einem Roboter zu schaffen, um die Kamera und das Kamerakoordinatensystem in das Roboterkoordinatensystem und somit die Roboterkoordinaten in das Bildverarbeitungssystem zu integrieren, wobei das Verfahren ohne Kalibriertafeln auskommen und in einfacher Weise durchführbar und wiederholbar sein soll, z.B. damit der Roboter anschließend die Position eines Werkstücks und die Position von Merkmalen im 3D-Raum unter Verwendung wenigstens einer dergestalt kalibrierten Kamera bestimmen kann, oder damit der Roboter unter Verwendung der Ergebnisse einer kameragestützten Lageerkennung an eine bestimmte Position und/oder in eine bestimmte Konfiguration gesteuert werden kann.

### Offenbarung der Erfindung und deren Vorteile:

Durch Aufgabe wird erfindungsgemäß gelöst durch ein Verfahren zur genauen Einmessung eines Kamera-Koordinatensystems mindestens einer Kamera gegenüber einem Roboter-Koordinatensystem eines Roboters, oder umgekehrt, wobei an dem Roboter ein Werkzeughalter, insbesondere Montageflansch, angeordnet ist, dessen Lage und Orientierung im Roboter-Koordinatensystem jederzeit abfragbar sind, mit folgenden Schritten:
A) an dem Werkzeughalter wird ein Kalibrierkörper starr angeordnet,
B) auf oder in dem Kalibrierkörper wird mindestens ein bestimmter Referenzpunkt gewählt,
C) die Lage des Referenzpunktes wird in Bezug auf den Werkzeughalter bestimmt und als Zwischenergebnis gespeichert,
D) der Roboter wird so gesteuert, dass der Referenzpunkt nacheinander mindestens drei beliebige verschiedene, nicht kollineare Aufpunkte anfährt, wobei nach Erreichen jedes Aufpunktes jeweils die Lage und Orientierung des Werkzeughalters im Roboter-Koordinatensystem bekannt sind oder abgefragt werden, hieraus und aus dem Zwischenergebnis die Lage des Referenzpunktes und damit diejenige des betreffenden Aufpunktes im Roboter-Koordinatensystem ermittelt wird, und der Kalibrierkörper jeweils durch die Kamera erfasst und abgebildet wird,
E) aus der Lage und Form der so gewonnenen Bilder des Kalibrierkörpers wird die Lage des Referenzpunktes in der Bildebene der Kamera bestimmt,
F) hieraus sowie aus der Lage der Aufpunkte im Roboter-Koordinatensystem wird die Lage der Aufpunkte im Kamera-Koordinatensystem ermittelt,
G) und aus dem Vergleich der Lagen der Aufpunkte im Kamera-Koordinatensystem und im Roboter-Koordinatensystem werden die Lage und Orientierung des Roboter-Koordinatensystems im Kamera-Koordinatensystem oder die Lage und Orientierung des Kamera-Koordinatensystems im Roboter-Koordinatensystem ermittelt.

Im Schritt C) wird somit der Referenzpunkt gegenüber dem Werkzeughalter eingemessen. Zur Durchführung des Schrittes E) kann besonders vorteilhaft ein Bildverarbeitungsprogramm verwendet werden. Zur Durchführung des Verfahrens wird von einer bekannten Brennweite des Kameraobjektivs bzw. bekanntem Abbildungsmaßstab der Kamera ausgegangen. Die Lage und Orientierung des Werkzeughalters im Roboter-Koordinatensystem können im Schritt D) insbesondere dadurch bekannt sein, dass sie dem Roboter vorgegeben werden.

Der Zweck des erfindungsgemäßen Verfahrens ist es, die Beziehungen zwischen dem Kamera-Koordinatensystem und dem Roboter-Koordinatensystem herzustellen. Die Erfindung betrifft somit Verfahren zur Kalibrierung zwischen einer Kamera und einem Roboter. Die Kamera kann insbesondere eine stationäre elektronische Kamera mit digitaler Bildverarbeitung sein. Die Ergebnisse einer derartigen Kalibrierung können z.B. angewandt werden, um mit Hilfe der Kamera eine Lageerkennung durchzuführen, d.h. z.B. die Position eines beliebigen Objektes, insbesondere eines Werkstücks oder die Position von Merkmalen unter Verwendung wenigstens einer dergestalt kalibrierten Kamera bestimmen zu können. Die Lageerkennung kann insbesondere eine dreidimensionale Lageerkennung sein; jedoch ist erfindungsgemäß auch eine Lageerkennung im zweieinhalbdimensionalen Raum oder im zweidimensionalen Raum oder im eindimensionalen Raum, d.h. bei z.B. 1 bis 6 Freiheitsgraden, möglich. Die Ergebnisse der Lageerkennung können insbesondere zur zielgenauen Steuerung des Roboters verwendet werden.

Das erfindungsgemäße Verfahren vereinfacht die Einmessung zwischen den beiden genannten Koordinatensystemen erheblich, ermöglicht eine derartige Einmessung in sehr kurzer Zeit bei sehr hoher Genauigkeit und macht die umständliche Verwendung von so genannten Kalibriertafeln, überflüssig. Dieser Vorteil ist in der Praxis von großer Tragweite, da Kalibriertafeln im allgemeinen große und damit sperrige und zudem gegen Beschädigung sehr empfindliche, mit außerordentlich großem Aufwand hergestellte Präzisionsanfertigungen sind, welche sorgfältig verwahrt und unter Umständen zunächst unter großem Aufwand und umfangreichen Schutzmaßnahmen herbeigeschafft werden müssen.

Vorteilhafterweise kann eine erfindungsgemäße Einmessung vollautomatisch durchgeführt werden; bei einmal installierter Software kann die Einmessung daher jederzeit auf Knopfdruck vorgenommen werden und erfordert somit nicht mehr die Mitarbeit oder sogar die Anreise von auf Einmessungen speziell ausgebildetem Personal; als einzige Vorarbeit sind lediglich die Anbringung des Kalibrierkörpers und die Einmessung des Referenzpunktes erforderlich. Die Kosten einer Einmessung können daher durch das erfindungsgemäße Verfahren drastisch verringert werden, wie auch die Ausfallzeiten einer Roboteranlage bei einer versehentlichen Zerstörung der Kalibrierung zwischen Roboter und Kamera stark verkürzt werden können.

Um das erfindungsgemäße Verfahren durchführen zu können, muss die Lage des Referenzpunkts im Roboter-Koordinatensystem möglichst jederzeit abfragbar oder ermittelbar sein. Um dies zu gewährleisten, kann im Schritt C) die Lage des Referenzpunktes in Bezug auf den Werkzeughalter ermittelt werden wie folgt:
a) an dem Werkzeughalter wird anstelle des Kalibrierkörpers eine Spitze, nämlich eine Kalibrierspitze starr so angeordnet, dass das äußerste Ende der Kalibrierspitze in Bezug auf den Werkzeughalter dieselbe Lage aufweist wie zuvor oder danach der Referenzpunkt,
b1) der Roboter wird so gesteuert, dass das äußerste Ende der Kalibrierspitze einen beliebigen ortsfesten Hilfspunkt anfährt, wobei der Werkzeughalter (W) nach Erreichen des Hilfspunktes im Roboter-Koordinatensystem eine bestimmte Lage und Orientierung aufweist, welche abgefragt werden,
b2) anschließend wird der Roboter so gesteuert, dass das äußerste Ende der Kalibrierspitze wiederum den Hilfspunkt anfährt, wobei der Werkzeughalter nach Erreichen des Hilfspunktes im Roboter-Koordinatensystem gegenüber dem Schritt b1) eine andere Lage und Orientierung aufweist, welche ebenfalls abgefragt werden,
b3) der Schritt b2) wird für mindestens eine gegenüber den Schritten b1) und b2) nochmals andere Lage und Orientierung des Werkzeughalters entsprechend erneut ausgeführt,
c) aus den in den Schritten b1) bis b3) gewonnenen Ergebnissen wird die Lage des Hilfspunktes und somit die Lage des äußersten Endes der Kalibrierspitze in Bezug auf den Werkzeughalter berechnet,
d) und in Bezug auf den Werkzeughalter wird die Lage des Referenzpunktes der Lage des äußersten Endes der Kalibrierspitze gleichgesetzt.

Da der Referenzpunkt in Bezug auf den Werkzeughalter dieselbe Lage einnimmt wie zuvor die Kalibrierspitze, tritt, wenn anstelle der Kalibrierspitze der Kalibrierkörper am Werkzeughalter befestigt ist, der Referenzpunkt an die Stelle der Kalibrierspitze, so dass die Gleichsetzung im schritt d) gerechtfertigt ist. Nach Ausführung dieser Schritte a) bis d) ist daher die Lage des Referenzpunktes im Roboter-Koordinatensystem jederzeit ermittelbar, da sie nämlich aus der jederzeit abfragbaren Lage und Orientierung des Werkzeughalters im Roboter-Koordinatensystem sowie dem Ergebnis des Schrittes d) folgt.

Gemäß einer besonders vorteilhaften Variante der Erfindung wird als Kalibrierkörper eine Kugel, Kalibrierkugel, verwendet. Hierbei kann insbesondere der Mittelpunkt der Kalibrierkugel als Referenzpunkt gewählt werden. Vorteilhaft bei dieser Variante der Erfindung ist insbesondere der Umstand, dass die Kalibrierkugel bei Betrachtung aus allen Richtung stets einen kreisförmigen Querschnitt aufweist und daher durch eine Bildverarbeitungs-Software besonders sicher erkannt werden kann. Ebenso brauchen in diesem Fall zur Bestimmung der Lage des Referenzpunktes, d.h. des Kugelmittelpunktes, im Bild der Kamera keine Entzerrungen usw. durchgeführt zu werden, da der Bildort des Kugelmittelpunkts bei der zweidimensionalen Abbildung durch die Kamera stets mit dem Kreismittelpunkt identisch ist.

Der Schritt D) kann insbesondere unter Anwendung der Methode des Bündelausgleichs durchgeführt werden.

Zur Erhöhung der Genauigkeit der Einmessung können die Schritte D) und E) für mindestens einen der Aufpunkte, vorzugsweise für alle Aufpunkte, mehrfach ausgeführt werden, so dass mindestens einer der Aufpunkte mehrfach angefahren wird, wobei über die hierdurch gewonnenen redundanten Messwerte oder Ergebnisse gemittelt werden kann. Ferner können zur Erhöhung der Genauigkeit der Einmessung die Schritte D) bis E) für eine Vielzahl von Aufpunkten durchgeführt werden, wobei darüber hinaus wiederum jeder Aufpunkt mehrfach angefahren werden kann.

Vorzugsweise werden die Aufpunkte so gewählt, dass sie einen Würfel oder Quader aufspannen. Ferner werden die Aufpunkte vorzugsweise so gewählt, dass sie in der Bildebene der Kamera eine Fläche aufspannen, welche mindestens 50% der Bildfläche der Kamera einnimmt.

Gemäß einer Variante der Erfindung wird der Roboter während der Ausführung des Schrittes D) und/oder während der Ausführung der Schritte b1) bis b3) nicht translatorisch verfahren. Insbesondere kann das Verfahren daher mit einem Roboter durchgeführt werden, welcher von vornherein nicht translatorisch verfahrbar ist.

Gemäß einer bevorzugten Variante der Erfindung wird der vorbeschriebene Prozess automatisch durchgeführt.

Gemäß einer weiteren bevorzugten Variante der Erfindung wird zur Erhöhung der Genauigkeit der Einmessung der Schritt b3) mehr as einmal ausgeführt, so dass der Hilfspunkt mehr als dreimal angefahren wird, wobei über die hierdurch gewonnenen redundanten Messwerte oder Ergebnisse gemittelt werden kann.

Um die Durchführung der Verfahrensschritte b1) bis b3) zu erleichtern, kann der Hilfspunkt durch eine ortsfeste Markierung markiert werden. Beispielsweise kann der Hilfspunkt durch einen Farbpunkt auf einem Gestell markiert sein, welches zur Durchführung des erfindungsgemäßen Verfahrens in Reichweite des Roboters ortsfest aufgestellt wird.

Die Reihenfolge der einzelnen Verfahrensschritte ist nicht zwingend; vielmehr können verschiedene äquivalente Reihenfolgen der einzelnen Verfahrensschritte erfindungsgemäß gewählt werden. Beispielsweise kann der Verfahrensschritt C) vor dem Schritt A) oder nach dem Schritt G) oder während jeder Phase des erfindungsgemäßen Verfahrens ausgeführt werden.

Gemäß einer Variante des Verfahrens wird eine Mehrzahl von Kameras zugleich verwendet, wobei das Verfahren zur gleichzeitigen Einmessung der Koordinatensysteme aller Kameras durchgeführt wird.

Gemäß einer weiteren Variante des Verfahrens werden zwei Kameras zugleich oder nacheinander verwendet und die Ergebnisse des Verfahrens dazu verwendet, das Koordinatensystem der einen Kamera auf das Koordinatensystem der anderen Kamera einzumessen.

Gemäß einer weiteren Variante des Verfahrens werden zwei Roboter zugleich oder nacheinander verwendet und die Ergebnisse des Verfahrens dazu verwendet, das Koordinatensystem des einen Roboters auf das Koordinatensystem des anderen Roboters einzumessen.

Als Aufpunkte werden gemäß einer Variante des Verfahrens Oberflächenpunkte eines starren Körpers, insbesondere Würfel oder Quader, gewählt, welcher im Bildfeld der Kamera angeordnet ist. Gemäß einer bevorzugten Variante wird jedoch auf die Verwendung des starren Körpers verzichtet und die Aufpunkte frei im Raum gewählt, wobei sie einen "virtuellen Körper" aufspannen können, so dass aus Sicht der Kamera keiner der Aufpunkte durch den starren Körper verdeckt oder unsichtbar ist.

Gemäß einer Variante werden die Ergebnisse des Verfahrens dazu verwendet, Ungenauigkeiten und Fehler des Roboters auszugleichen. Diese Variante ist insbesondere dann relevant, wenn redundante Messergebnisse vorliegen.

Das Roboter-Koordinatensystem kann insbesondere ein kartesisches Koordinatensystem sein; ebenso kann das Kamera-Koordinatensystem insbesondere ein kartesisches Koordinatensystem sein.

Gemäß einer Variante des Verfahrens dient dasselbe zur Kalibrierung zwischen einer stationären elektronischen Kamera mit digitaler Bildverarbeitung und einem Roboter, dessen Roboterkoordinatensystem bekannt damit dieser anschließend eine Lageerkennung durchzuführen oder die Position eines Objekts oder Werkstücks und die Position von Merkmalen im 3D-Raum unter Verwendung wenigstens einer dergestalt kalibrierten Kamera zu bestimmen in der Lage ist, wobei die folgenden Schritte ausgeführt werden:
aa) ein erstes Kalibriertool, insbesondere in Form einer Spitze, Kalibrierspitze, wird am Roboter angebracht und im Roboterkoordinatensystem eingemessen (Tooleinmessung),
bb) das erste Kalibriertool bzw. die Kalibrierspitze am Roboter wird gegen ein weiteres, zweites Kalibriertool ersetzt, welches vorzugsweise für die Bildverarbeitung besser geeignet ist als das erste Kalibriertool, dessen Position vorzugsweise mit der Position des ersten Kalibriertools identisch ist und welches z.B. eine Kugel mit einem solchen Durchmesser ist, dass der Mittelpunkt der Kugel und die äußerste Spitze der Kalibrierspitze zusammenfallen, mit der Folge, dass der Mittelpunkt der Kugel im Roboterkoordinatensystem bekannt ist,
cc) der Roboter mit aufgesetztem zweiten Kalibriertool, z.B. Kugel, wird im Bildfeld der Kamera an einen im Kamerakoordinatensystem gegebenen Punkt manövriert, vorzugsweise in die Mitte des Bildfeldes,
dd) in Abhängigkeit vom Bildverarbeitungssystem wird der Roboter zu im Roboterkoordinatensystem definierten und im Bildfeld der Kamera liegenden Punkten manövriert und bei Erreichen eines vorgegebenen Punktes eine Messung zur Bestimmung der Position des zweiten Kalibriertools im Kamera-Koordinatensystem seitens des Bildverarbeitungssystems durchgeführt,
ee) es wird für jeden Punkt ein Vergleich durchgeführt, wohin sich der Roboter von Punkt zu Punkt in der Bildebene des Kamerabildes bzw. des CCD-Chips bewegt hat gegenüber den vom Roboter zu diesen Punkten übermittelten Koordinaten,
ff) der Vergleich stellt die exakte Position der Kamera in Bezug zum Roboter her, so dass als Ergebnis die Positionierung des Kamerakoordinatensystems in Bezug zum Roboterkoordinatensystem erhalten wird ist.

Der Grund für die Verwendung des zweiten anstelle des ersten Kalibriertools im Schritt cc) besteht darin, dass das zweite Kalibriertool bessere Voraussetzungen für die Bildverarbeitung schafft bzw. Für die Bildverarbeitung besser geeignet ist als das erste Kalibriertool. Voraussetzung ist, dass beide Kalibriertools in ihren Positionen identisch sind.

Prinzipiell kann das Verfahren alternativ unter Verzicht auf wenigstens einen dieser Vorteile vollständig mit ein- und demselben am Roboter angebrachten Kalibriertool durchgeführt werden.

Zur Durchführung des Schrittes aa) können bekannte Verfahren durchgeführt werden, insbesondere solche, welche von Roboterherstellern als spezifische Standardverfahren angegeben werden. Als Kalibriertool zur Durchführung des Schrittes aa) ist eine Kalibrierspitze besonders gut geeignet. Zur Durchführung des Schrittes aa) ist keine Bildverarbeitung notwendig.
In weiterer erfindungsgemäßer Ausgestaltung des Verfahrens wird der vorbeschriebene Prozess automatisch durchgeführt.

In einer weiteren erfindungsgemäßen Ausgestaltung des Verfahrens werden zur Erhöhung der Genauigkeit der Kalibrierung dieselben Punkte mehrfach angefahren.

Ein Vorteil des erfindungsgemäßen Verfahrens besteht darin, dass dasselbe keinen Kalibrierkörper, wie Kalibriertafel, mehr benötigt. Durch das Verfahren kann ein virtueller Körper aufgespannt und im Wege einer dynamischen Berechnung eine Matrix definiert werden, mittels derselben die Position des Roboters im Kamerasystem ermittelt wird. Die Invertierung der Matrix bedeutet, dass dann die Position der Kamera im Roboterkoordinatensystem gegeben ist.

Ein weiterer Vorteil besteht darin, dass Fehler und Ungenauigkeiten des Roboters durch eine mathematische Überbestimmung identifiziert und ausgeglichen werden können.

Ein weiterer Vorteil durch die Verwendung einer Kugel als Kalibriertool liegt darin, dass die Kamera beim Vermessungsvorgang nicht senkrecht stehen muss, weil sie immer auf einen sphärischen Teil der Oberfläche der Kugel blickt. Hingegen wäre die Einmessung der Kalibrierspitze nicht oder unter Umständen nur ungenau möglich, wenn beispielsweise die Spitze weg von der Kamera weisen würde.

Durch das erfindungsgemäße Verfahren können ebenfalls die Freiheitsgrade der Winkel des Kamerakoordinatensystems in Bezug zum Roboterkoordinatensystem ermittelt werden. Beispielsweise kann der Roboter im Roboterkoordinatensystem, also in seiner Fahrebene, eine vorbestimmte Strecke - somit zwischen zwei gegebenen Punkten - und damit in gegebener Richtung abfahren und dem Bildverarbeitungssystem die Koordinaten melden.

Im Bildverarbeitungssystem in der Bildebene kann erkannt werden, beispielsweise visuell oder nur rechnerisch, unter welchem Winkel der Roboter in der Bildebene und in Bezug zum Kamerakoordinatensystem gefahren ist. Dadurch kann in der Bildebene erkannt werden, ob die Achsen von Kamera und Roboter übereinstimmen oder nicht.

Dadurch kann zum Beispiel ermittelt werden, ob die Kalibrierspitze des Kalibriertools krumm ist. Fährt der Roboter in seinem Roboterkoordinatensystem in der Fahrebene die Strecke X, ermittelt hingegen das Bildverarbeitungssystems in der Bildebene eine Verfahrstrecke von X+Δx, so heißt das, dass die äußerste Spitze des Kalibriertools um den Betrag Δx von der Mittelachse des Kalibriertools abweicht.

Als Kalibrierspitze kann ein Stab mit einer Länge zum Beispiel zwischen 100mm bis 150mm verwendet werden, welcher an seinem oberen Ende ein Innengewinde zur Befestigung am Roboter und an seinem unteren Ende ein Außengewinde zum Aufschrauben einer konisch geformten Spitze aufweist, welche zum Beispiel eine Eigenlänge zwischen 10mm bis 15mm aufweisen kann. Diese Spitze kann nun gegen eine Kugel mit einem solchen Durchmesser ausgetauscht werden, dass der Kugelmittelpunkt exakt - so genau wie herstellungstechnisch möglich - mit dem äußersten Ende der Spitze zusammenfällt, so dass diese bei dem vorgenannten Beispiel einen Durchmesser zwischen 20mm bis 30mm aufweist.

Das erfindungsgemäße Verfahren stellt ein hochgenaues Kalibrierverfahren zur Verfügung, welches insbesondere keine Kalibriertafeln oder sonstige Kalibrierinstrumente benötigt und in schneller und einfacher Weise genau reproduzierbar ist, wozu nur ein bzw. zwei Kalibriertools (z.B. Kalibrierspitze und Kalibrierkugel) benötigt werden.

Die Erfindung betrifft ein Verfahren zur Kalibrierung zwischen einer elektronischen Kamera mit digitaler Bildverarbeitung und einem Roboter, dessen Roboterkoordinatensystem bekannt ist. Hierzu wird ein erstes Kalibriertool z.B. in Form einer Spitze, Kalibrierspitze, am Roboter angebracht und dessen Position im Roboterkoordinatensystem eingemessen (Tooleinmessung). Das Kalibriertool Roboter wird gegebenenfalls gegen ein zweites Kalibrierungstool ausgetauscht, dessen Position mit derjenigen des ersten Kalibriertools identisch ist. Insbesondere kann das zweite Kalibriertool eine Kugel sein, deren Mittelpunkt mit dem äußerste Ende der Kalibrierspitze zusammenfällt, mit der Folge, dass der Mittelpunkt der Kugel im Roboterkoordinatensystem bekannt ist.

Der Roboter mit Kalibriertool bzw. aufgesetzter Kugel wird im Bildfeld der Kamera an einen im Kamerakoordinatensystem gegebenen Punkt manövriert, vorzugsweise in die Mitte des Bildfeldes, wonach in Abhängigkeit vom Bildverarbeitungssystem der Roboter zu im Roboterkoordinatensystem definierten und im Bildfeld der Kamera liegenden Punkten manövriert wird. Bei Erreichen eines vorgegebenen Punktes wird eine Messung der Position des Kalibriertools (mittels des Bildverarbeitungssystems) durchgeführt, wobei für jeden Punkt ein Vergleich durchgeführt wird, wohin sich der Roboter von Punkt zu Punkt im Kamerabild bewegt hat gegenüber den vom Roboter zu diesen Punkten übermittelten Koordinaten. Der Vergleich stellt die exakte Position der Kamera in Bezug zum Roboter her, so dass als Ergebnis die Positionierung des Kamerakoordinatensystems in Bezug zum Roboterkoordinatensystem erhalten wird sowie umgekehrt.

Ein Roboter, der Teile korrekt aufnehmen soll, muss sich eines Hilfsmittels bedienen, z.B. eines oder mehrerer optischer Sensoren. Ein solcher Sensor bzw. einer dieser Sensoren ist eine Kamera; mit Hilfe entsprechender Software kann man den Roboter an die richtige Aufnahmestelle delegieren. Hierzu muss die Software des Bildverarbeitungssystems die Position der Kamera in Bezug zum Roboter-Koordinatensystem kennen.

Diese Übereinanderlegung der Koordinatensysteme der Kamera und des Roboters nennt man Kamerakalibrierung.

### Die Kamerakalibrierung wird vorzugsweise durchgeführt wie folgt:

Ein Kalibriertool in Form einer Spitze und einer Kugel muss angefertigt werden. Der Roboterprogrammierer befestigt die Kalibrierspitze am Roboter und misst sie als neues Tool ein. Anschließend stellt er den Roboter auf Programmebene so ein, dass er nun im Koordinatensystem (Base) fährt, in dem er später seine Teile aufnehmen will. Nun wird noch das neu eingemessene Kalibriertool im Programm angewählt.

Als nächstes wird die Spitze des Kalibriertools abgenommen und durch eine Kugel ersetzt, wobei darauf zu achten ist, dass der Mittelpunkt der Kugel exakt an der gleichen Position im Raum ist, wie die Spitze zuvor.

Nun bewegt der Roboterprogrammierer den Roboter mit aufgesetzter Kugel im Kamerabild an einen Punkt; ein Punkt in oder nahe der Bildfeldmitte ist ratsam. Jetzt kann der Roboterprogrammierer die Kalibrierung anstarten, die daraufhin automatisch bis zum Ende durchgeführt wird.

Der Roboter fährt in Abhängigkeit des Bildverarbeitungssystems definierte Punkte im Bildfeld der Kamera an. Jedesmal, wenn er einen dieser Punkte erreicht hat, wird eine Messung am Bildverarbeitungssystem, BV, gestartet. Die Messung vergleicht, wohin sich der Roboter von Punkt zu Punkt im Kamerabild bewegt, anhand der übermittelten Koordinaten vom Roboter zum BV kann dieser Vergleich angestellt werden.

Die Punkte, die der Roboter anfährt, befinden sich in allen drei Bildebenen X, Y, Z. Somit wird die Kamera gleich dreidimensional vermessen. Ein mehrfaches Anfahren der gleichen Punkte erhöht die Genauigkeit der Kalibrierung. Nach Beendigung der automatischen Kalibrierung ist die exakte Position der Kamera im Bezug zum Roboter bekannt.

Kurzbeschreibung der Zeichnung, in welcher jeweils schematisch veranschaulichen:
- Fig. 1: einen Roboter mit einem Werkzeughalter, an dem eine Kalibierspitze starr angeordnet ist und mit der ein ortsfester Hilfspunkt mehrfach angefahren wird,
- Fig. 2: eine Kalibrierkugel, welche anstelle der Kalibrierspitze von Fig. 1 an dem Werkzeughalter des Roboters von Fig. 1 starr angeordnet ist, wobei der Werkzeughalter nur teilweise und der Roboter nicht dargestellt ist, und wobei die zuvor an dem Werkzeughalter starr angeordnete Kalibierspitze zum Vergleich gestrichelt dargestellt ist, und
- Fig. 3: eine Kamera sowie den Roboter von Fig. 1, welcher mit der Kalibrierkugel von Fig. 2 nacheinander verschiedene im Bildfeld der Kamera liegende Aufpunkte anfährt.

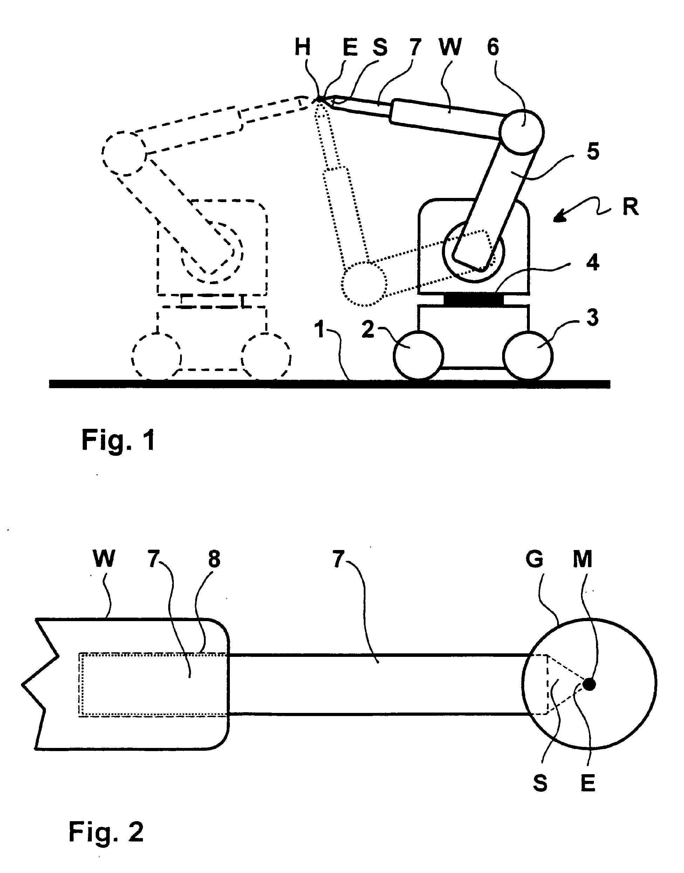

Das erfindungsgemäßen Verfahren dient zur genauen Einmessung eines Kamera-Koordinatensystems, welches im folgenden mit KKS abgekürzt wird und auf eine in Fig. 1 und Fig. 2 nicht dargestellte Kamera K bezogen ist, gegenüber einem Roboter-Koordinatensystem, welches im folgenden mit RKS abgekürzt wird und auf einen Roboter R bezogen ist, an welchem ein Werkzeughalter W angeordnet ist, dessen Lage und Orientierung - wie im Stand der Technik selbstverständlich - im RKS jederzeit abfragbar sind. Die Kamera K kann insbesondere eine elektronische Kamera sein, in deren Bildebene ein CCD-Chip angeordnet ist.

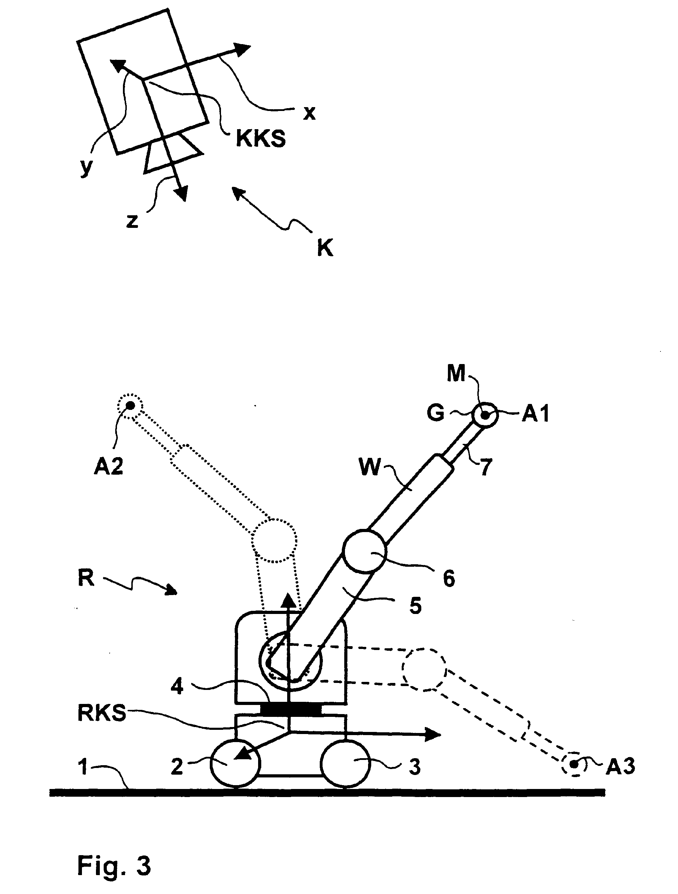

Zunächst wird auf Fig. 3 Bezug genommen, welche zur Veranschaulichung der erfindungsgemäß durchzuführenden Verfahrensschritte A) bis G) dient.

Im Schritt A) wird an dem Roboter R ein Kalibrierkörper G starr angeordnet, welcher im Beispiel von Fig. 3 eine Kalibrierkugel G ist. lm Schritt B) wird der Mittelpunkt M der Kalibrierkugel G als Referenzpunkt M gewählt.

lm Schritt C) wird die Lage des Referenzpunktes M in Bezug auf den Werkzeughalter W bestimmt und als Zwischenergebnis gespeichert, wobei derartige Methoden bekannt sind; eine besonders vorteilhafte Methode hierzu wird unten unter Bezug auf die Figuren 1 und 2 näher erläutert.

Im Schritt D) wird der Roboter R so gesteuert, dass Referenzpunkt M nacheinander mindestens drei beliebige verschiedene, nicht kollineare, ansonsten beliebige Aufpunkte A1,A2,A3 anfährt, wobei nach Erreichen jedes Aufpunktes A1, A2, A3 jeweils die Lage und Orientierung des Werkzeughalters W im Roboter-Koordinatensystem RKS abgefragt wird, aus dem Abfrageergebnis und dem Zwischenergebnis die Lage des Referenzpunktes M und damit diejenige des betreffenden Aufpunktes A1,A2,A3 im Roboter-Koordinatensystem RKS ermittelt wird, und der Kalibrierkörper G jeweils durch die Kamera K erfasst und abgebildet wird.

Fig. 3 zeigt die Kamera K sowie den Roboter R1, welcher mit der Kalibrierkugel G nacheinander die verschiedenen im Bildfeld der Kamera K liegenden Aufpunkte A1,A2,A3 anfährt, wobei die Konfiguration des Roboters R bei Erreichen des Aufpunktes A1 durchgezogen, bei Erreichen des Aufpunktes A2 punktiert und bei Erreichen des Aufpunktes A3 gestrichelt eingezeichnet ist. Die z-Achse des KKS fällt vorzugsweise mit der optischen Achse der Kamera K zusammen.

Im Verfahrensschritt E) wird aus der Lage und Form der so gewonnenen zweidimensionalen Bilder der Kalibrierkugel G die Lage des Referenzpunktes M in der Bildebene der Kamera K bestimmt. Hierbei spielt es keine störende Rolle, dass der Referenzpunkt selbst im Beispiel von Fig. 3 natürlich nicht durch die Kamera K abgebildet werden kann, da er sich im inneren der Kalibrierkugel G befindet und somit für die Kamera K nicht sichtbar ist. Entscheidend ist allein, dass die Lage des Referenzpunkts M in der zweidimensionalen Bildebene der Kamera bestimmbar ist, z.B. durch ein automatisch arbeitendes Bildverarbeitungsprogramm.

lm vorliegenden Beispiel von Fig. 3 ist diese Bestimmung besonders einfach und vorteilhafterweise unabhängig von der Blickrichtung der Kamera K stets eindeutig möglich, da sich die Kalibrierkugel G immer als Kreis bzw. Scheibe abbildet und daher der Referenzpunkt M, d.h. der Mittelpunkt M der Kalibrierkugel G, ebenfalls unabhängig von der Blickrichtung der Kamera K, in der Bildebene der Kamera immer in der Mitte dieses Kreises bzw. dieser Scheibe zu liegen kommt.

lm Verfahrensschritt F) wird aus den so gewonnenen Ergebnissen sowie aus der Lage der Aufpunkte A1,A2,A3 im RKS die dreidimensionale Lage der Aufpunkte A1,A2,A3 im KKS ermittelt. Hierzu wird von einer bekannten Brennweite des Kameraobjektivs bzw. bekanntem Abbildungsmaßstab der Kamera K ausgegangen.

Somit sind nun die Lagen aller Aufpunkte A1,A2,A3 in beiden Koordinatensystemen bekannt. lm Verfahrensschritt G) schließlich wird aus dem Vergleich der Lagen der Aufpunkte A1,A2,A3 im KKS und im RKS die Lage und Orientierung des RKS im KKS oder die Lage und Orientierung des KKS im RKS ermittelt, womit das Ziel des Verfahrens erreicht ist.

Die Koordinatensysteme KKS und RKS können jeweils prinzipiell beliebig orientiert sein, und ihre Ursprünge können jeweils eine beliebige Lage aufweisen. Daher braucht die z-Achse des KKS nicht zwingend mit der optischen Achse der Kamera K zusammenzufallen. Ferner brauchen die Koordinatensysteme RKS und KKS jeweils nicht zwingend kartesische Koordinatensysteme zu sein.

Im Schritt C) des erfindungsgemäßen Verfahrens wird die (konstante) Lage des Referenzpunkts M in Bezug auf den Werkzeughalter W ermittelt. Unter Bezug auf die Fig. 1 und 2 wird im folgenden eine bevorzugte Methode zur Durchführung des Schrittes C) erläutert. Im folgenden wird gemäß einer bevorzugten Variante dabvon ausgegangen, dass dieser Schritt C) noch vor den Schritten A), B) und D) bis G) d.h. zu Beginn des Verfahrens, ausgeführt wird.

Fig. 1 zeigt einen Roboter R mit einem schwenkbaren Arm 5, an welchem über ein Gelenk 6 ein Werkzeughalter W angeordnet ist. Dieser ist gegenüber dem Arm 5 mittels des Gelenks 6 seinerseits schwenkbar. Der Roboter R ist mittels Rädern 2,3 auf einer Schiene 1 translatorisch verfahrbar und weist eine Drehplatte 4 auf, mittels welcher der obere Teil des Roboters R samt Arm 5, Gelenk 6 und Werkzeughalter W um die Vertikalachse des Roboters R gegenüber der Schiene 1 drehbar ist.

Zur Bestimmung der (konstanten) Lage des Referenzpunktes M in Bezug auf den Werkzeughalter W wird in einem ersten Teilschritt, Teilschritt a), an dem Werkzeughalter W anstelle des Kalibrierkörpers G eine Spitze S, nämlich eine Kalibrierspitze S starr so angeordnet, dass das äußerste Ende der Kalibrierspitze S in Bezug auf den Werkzeughalter W dieselbe Lage aufweist wie danach der Referenzpunkt M, d.h. der Mittelpunkt der Kalibrierkugel G, welche später anstelle der Kalibrierspitze S gemäß Schritt A) an dem Werkzeughalter W starr angebracht wird.

Zur weiteren Erläuterung dieses Teilschrittes dient Fig. 2, in welcher die Kalibrierkugel G anstelle der Kalibrierspitze S von Fig. 1 an dem Werkzeughalter W des Roboters R von Fig. 1 starr angeordnet ist. Der Werkzeughalter W ist in Fig. 2 nur teilweise, der Roboter R überhaupt nicht dargestellt. Der Werkzeughalter W weist im Beispiel von Fig. 2 eine Sackbohrung 8 auf, welche einen Endbereich einer Stange 7 formschlüssig und spielfrei aufnimmt, so dass die Stange 7 starr mit dem Werkzeughalter W verbunden ist. Beispielsweise kann die Sackbohrung 8 ein Innengewinde und der in der Sackbohrung 8 aufgenommene Teil der Stange 7 ein entsprechendes Außengewinde aufweisen, so dass die Stange 7 mit dem Werkzeughalter W verschraubbar ist. Ferner kann selbstverständlich ein Arretiermechanismus zur Arretierung der Stange 7 an dem Werkzeughalter W vorgesehen sein.

Auf das vom Werkzeughalter W abgewandte Ende der Stande 7 ist im Beispiel von Fig. 2 anstelle der Kalibrierspitze S die Kalibrierkugel G aufgeschraubt - wobei der entsprechende Schraubmechanismus nicht dargestellt ist - so dass die Kalibrierspitze S über die Stange 7 starr mit dem Werkzeughalter W verbunden worden ist. Nach Abschrauben der Kalibrierkugel G ist an deren Stelle die Kalibrierspitze S auf die Stange 7 aufschraubbar, und umgekehrt. Die Abmessungen sind hierbei so gewählt, dass die äußerste Spitze der auf die Stange 7 aufgeschraubten Kalibrierspitze S so genau wie herstellungstechnisch möglich dieselbe Lage aufweist wie der Mittelpunkt M der anstelle der Kalibrierspitze S auf die Stange 7 aufgeschraubten Kalibrierkugel G, jeweils bezogen auf den Werkzeughalter W.

Zum Vergleich der jeweils auf den Werkzeughalter W bezogenen Positionen der Kalibrierkugel G und der zuvor über die Stange 7 am Werkzeughalter W starr angeordneten Kalibrierspitze S ist die Position der letzteren in Fig. 2 gestrichelt eingezeichnet. Man erkennt, dass der Mittelpunkt M der Kalibrierkugel G in Bezug auf den Werkzeughalter W dieselbe Lage aufweist wie zuvor das äußerste Ende E der Kalibrierspitze S.

Die Teilschritte b1) bis b3) werden unter Bezug auf Fig. 1 erläutert.
b1) In diesem Teilschritt wird der Roboter R so gesteuert, dass das äußerste Ende E der Kalibrierspitze S einen beliebigen ortsfesten Hilfspunkt H anfährt, wobei der Werkzeughalter W nach Erreichen des Hilfspunktes H im RKS eine bestimmte Lage und Orientierung aufweist, welche abgefragt werden. Der sich in dieser Lage und Orientierung befindende Werkzeughalter W ist in Fig. 1 durchgezogen eingezeichnet.
b2) In einem weiteren Teilschritt wird der Roboter R so gesteuert, dass das äußerste Ende E der Kalibrierspitze S wiederum den Hilfspunkt H anfährt, wobei aber diesmal der Werkzeughalter W nach Erreichen des Hilfspunktes H im RKS gegenüber dem vorhergehend erläuterten Verfahrensschritt b1) eine andere Lage und Orientierung aufweist, welche ebenfalls abgefragt werden. Der sich in dieser Lage und Orientierung befindende Werkzeughalter W ist in Fig. 1 punktiert eingezeichnet.
b3) In einem weiteren Teilschritt wird der Roboter R mindestens noch einmal so gesteuert, dass das äußerste Ende E der Kalibrierspitze S wiederum den Hilfspunkt H anfährt. Im Beispiel von Fig. 1 wird der Roboter R zu diesem Zweck auf der Schiene 1 translatorisch verfahren; der Roboter ist an der so erreichten Position in Fig. 1 gestrichelt eingezeichnet. Diesmal weist der Werkzeughalter W nach Erreichen des Hilfspunktes H im RKS gegenüber den beiden vorhergehend erläuterten Verfahrensschritten b1), b2) eine wiederum andere Lage und Orientierung auf, welche ebenfalls abgefragt werden. Der sich in dieser Lage und Orientierung befindende Werkzeughalter W ist in Fig. 1 gestrichelt eingezeichnet. Ein translatorisches Verfahren des Roboters R ist zur Durchführung der Schritte b1) bis b3) jedoch nicht zwingend erforderlich, sofern der Roboter R genügend Freiheitsgrade besitzt, um den Hilfspunkt H mit der Kalibrierspitze S ohne translatorisches Verfahren des Roboters R in der genannten Weise dreimal anzufahren, was bei handelsüblichen Robotern in der Regel der Fall ist. Beispielsweise könnte der Roboter R von Fig. 1 hierbei alternativ von seiner Möglichkeit Gebrauch machen, sein Oberteil mit Hilfe der Drehplatte 4 um eine zur Schiene 1 senkrechte Achse zu drehen.

Optional kann der Hilfspunkt H zum Zweck der Erhöhung der Genauigkeit noch einmal oder mehrmals erneut angefahren werden, wobei jedesmal der Werkzeughalter W nach Erreichen des Hilfspunktes H im RKS gegenüber den beiden vorhergehend erläuterten Verfahrensschritten eine wiederum andere Lage und Orientierung aufweist, welche jeweils wiederum abgefragt werden. Die so erhaltene Redundanz der Ergebnisse kann zur Erhöhung der Genauigkeit des Verfahrens benutzt werden.

Um das Anfahren des Hilfspunktes H zu erleichtern, kann dessen Lage durch eine ortsfeste Markierung markiert werden.
c) Aus den in den Schritten b1) bis b3) gewonnenen Ergebnissen kann die Lage des Hilfspunktes H und somit insbesondere die Lage des äußersten Endes E der Kalibrierspitze S in Bezug auf den Werkzeughalter W berechnet werden.
d) Da die Kalibrierspitze S gegen die Kalibrierkugel G austauschbar ist, wobei lediglich der Kugelmittelpunkt M an die Stelle des äußersten Endes E der Kalibrierspitze S tritt, können in Bezug auf den Werkzeughalter W die Lage des Referenzpunktes M und Lage des äußersten Endes E der Kalibrierspitze gleichgesetzt werden, womit die Lage des Kugelmittelpunktes M, d.h. des Referenzpunktes M in Bezug auf den Werkzeughalter W bekannt und somit das Ziel des Schrittes C) erreicht ist. Die Durchführung der Schrittes C) mit Hilfe der Kalibrierspitze S bietet den Vorteil, dass mittels der Kalibrierspitze S eine sehr hohe Genauigkeit beim Anfahren des vorher z.B. mittels eines Farbpunktes markierten Hilfspunktes H möglich ist; dies wäre bei einer theoretisch selbstverständlich ebenso denkbaren Durchführung des Schrittes C) mit Hilfe der Kalibrierkugel G anstelle der Kalibrierspitze S nicht der Fall.

### Gewerbliche Anwendbarkeit:

Die Erfindung ist gewerblich anwendbar z.B. im Bereich der industriellen Fertigungstechnik und in der Prozessautomation.

### Liste der Bezugszeichen:

- 1: Schiene
- 2,3: Räder
- 4: Drehplatte
- 5: Arm
- 6: Gelenkt
- 7: Stange
- 8: Sackbohrung in W
- A1,A2,A3: Aufpunkte
- E: äußerstes Ende von S
- G: Kalibrierkugel
- H: ortsfester Hilfspunkt
- K: Kamera
- KKS: Kamera-Koordinatensystem
- M: Mittelpunkt von G
- R: Roboter
- RKS: Roboter-Koordinatensystem
- S: Kalibrierspitze
- W: Werkzeughalter

## Patentansprüche

1. Verfahren zur genauen Einmessung eines Kamera-Koordinatensystems (KKS) mindestens einer Kamera (K) gegenüber einem Roboter-Koordinatensystem (RKS) eines Roboters (R), oder umgekehrt, wobei an dem Roboter (R) ein Werkzeughalter (W), insbesondere Montageflansch (W), angeordnet ist, dessen Lage und Orientierung im Roboter-Koordinatensystem (RKS) jederzeit abfragbar sind, mit folgenden Schritten:
A) an dem Werkzeughalter (W) wird ein Kalibrierkörper (G) starr angeordnet,
B) auf oder in dem Kalibrierkörper (G) wird mindestens ein bestimmter Referenzpunkt (M) gewählt,
C) die Lage des Referenzpunktes (M) wird in Bezug auf den Werkzeughalter (W) bestimmt und als Zwischenergebnis gespeichert,
D) der Roboter (R) wird so gesteuert, dass der Referenzpunkt (M) nacheinander mindestens drei beliebige verschiedene, nicht kollineare Aufpunkte (A1,A2, A3) anfährt, wobei nach Erreichen jedes Aufpunktes (A1,A2,A3) jeweils
- die Lage und Orientierung des Werkzeughalters (W) im Roboter-Koordinatensystem (RKS) bekannt ist oder abgefragt werden,
- hieraus und aus dem Zwischenergebnis die Lage des Referenzpunktes (M) und damit diejenige des betreffenden Aufpunktes (A1,A2,A3) im Roboter-Koordinatensystem (RKS) ermittelt wird, und
- der Kalibrierkörper (G) jeweils durch die Kamera (K) erfasst und abgebildet wird,
E) aus der Lage und Form der so gewonnenen Bilder des Kalibrierkörpers (G) wird die Lage des Referenzpunktes (M) in der Bildebene der Kamera (K) bestimmt,
F) hieraus sowie aus der Lage der Aufpunkte (A1,A2,A3) im Roboter-Koordinatensystem (RKS) wird die Lage der Aufpunkte (A1,A2,A3) im Kamera-Koordinatensystem (KKS) ermittelt,
G) und aus dem Vergleich der Lagen der Aufpunkte (A1,A2,A3) im Kamera-Koordinatensystem (KKS) und im Roboter-Koordinatensystem (RKS) werden die Lage und Orientierung des Roboter-Koordinatensystems (RKS) im Kamera-Koordinatensystem (KKS) oder die Lage und Orientierung des Kamera-Koordinatensystems (KKS) im Roboter-Koordinatensystem (RKS) ermittelt.

2. Verfahren nach Anspruch 1, **dadurch gekennzeichnet,**
**dass** im Schritt C) die Lage des Referenzpunktes (M) in Bezug auf den Werkzeughalter (W) ermittelt wird wie folgt:
a) an dem Werkzeughalter (W) wird anstelle des Kalibrierkörpers (G) eine Spitze (S), nämlich eine Kalibrierspitze (S) starr so angeordnet, dass das äußerste Ende der Kalibrierspitze (S) in Bezug auf den Werkzeughalter (W) dieselbe Lage aufweist wie zuvor oder danach der Referenzpunkt (M),
b1) der Roboter (R) wird so gesteuert, dass das äußerste Ende (E) der Kalibrierspitze (S) einen beliebigen ortsfesten Hilfspunkt (H) anfährt, wobei der Werkzeughalter (W) nach Erreichen des Hilfspunktes (H) im Roboter-Koordinatensystem (RKS) eine bestimmte Lage und Orientierung aufweist, welche abgefragt werden,
b2) anschließend wird der Roboter (R) so gesteuert, dass das äußerste Ende (E) der Kalibrierspitze (S) wiederum den Hilfspunkt (H) anfährt, wobei der Werkzeughalter (W) nach Erreichen des Hilfspunktes (H) im Roboter-Koordinatensystem (RKS) gegenüber dem Schritt b1) eine andere Lage und Orientierung aufweist, welche ebenfalls abgefragt werden,
b3) der Schritt b2) wird für mindestens eine gegenüber den Schritten b1) und b2) nochmals andere Lage und Orientierung des Werkzeughalters (W) entsprechend erneut ausgeführt,
c) aus den in den Schritten b1) bis b3) gewonnenen Ergebnissen wird die Lage des Hilfspunktes (H) und somit die Lage des äußersten Endes (E) der Kalibrierspitze (S) in Bezug auf den Werkzeughalter (W) berechnet,
d) und in Bezug auf den Werkzeughalter (W) wird die Lage des Referenzpunktes (M) der Lage des äußersten Endes (E) der Kalibrierspitze gleichgesetzt.

3. Verfahren nach Anspruch 1 oder 2, **dadurch gekennzeichnet,**
**dass** als Kalibrierkörper (G) eine Kugel (G), nämlich eine Kalibrierkugel (G), verwendet wird.

4. Verfahren nach Anspruch 3, **dadurch gekennzeichnet,**
**dass** der Mittelpunkt (M) der Kalibrierkugel (G) als Referenzpunkt (M) gewählt wird.

5. Verfahren nach einem der Ansprüche 1 bis 4, **dadurch gekennzeichnet,**
**dass** der Schritt D) unter Anwendung der Methode des Bündelausgleichs durchgeführt wird.

6. Verfahren nach einem der Ansprüche 1 bis 5, **dadurch gekennzeichnet,**
**dass** zur Erhöhung der Genauigkeit der Einmessung die Schritte D) und E) für mindestens einen der Aufpunkte (A1,A2,A3) mehrfach ausgeführt werden und somit mindestens einer der Aufpunkte (A1,A2,A3) mehrfach angefahren wird.

7. Verfahren nach einem der Ansprüche 1 bis 6, **dadurch gekennzeichnet,**
**dass** zur Erhöhung der Genauigkeit der Einmessung die Schritte D) bis E) für eine Vielzahl von Aufpunkten (A1,A2,A3) durchgeführt werden.

8. Verfahren nach Anspruch 7, **dadurch gekennzeichnet,**
**dass** die Aufpunkte (A1,A2,A3) so gewählt werden, dass sie einen Würfel oder Quader aufspannen.

9. Verfahren nach einem der Ansprüche 1 bis 8, **dadurch gekennzeichnet,**
**dass** die Aufpunkte (A1,A2,A3) so gewählt werden, dass sie in der Bildebene der Kamera (K) eine Fläche aufspannen, welche mindestens 50% der Bildfläche der Kamera (K) einnimmt.

10. Verfahren nach einem der Ansprüche 1 bis 9, **dadurch gekennzeichnet,**
**dass** der Roboter (R) während der Ausführung des Schrittes D) und/oder während der Ausführung der Schritte b1) bis b3) nicht translatorisch verfahren wird.

11. Verfahren nach einem der Ansprüche 1 bis 10, **dadurch gekennzeichnet,**
**dass** der vorbeschriebene Prozess automatisch durchgeführt wird.

12. Verfahren nach Anspruch 2, **dadurch gekennzeichnet,**
**dass** zur Erhöhung der Genauigkeit der Einmessung der Schritt b3) mehr als einmal ausgeführt und somit der Hilfspunkt (H) mehr als dreimal angefahren wird.

13. Verfahren nach einem der Ansprüche 2 oder 12, **dadurch gekennzeichnet,**
**dass** der Hilfspunkt (H) durch eine ortsfeste Markierung markiert wird.

14. Verfahren nach einem der Ansprüche 1 bis 13, **dadurch gekennzeichnet,**
**dass** der Schritt C) vor dem Schritt A) oder nach dem Schritt G) ausgeführt wird.

15. Verfahren nach einem der Ansprüche 1 bis 14, **dadurch gekennzeichnet,**
**dass** eine Mehrzahl von Kameras (K) zugleich verwendet werden und das Verfahren zur gleichzeitigen Einmessung der Koordinatensysteme (KKS) aller Kameras (K) durchgeführt wird.

16. Verfahren nach einem der Ansprüche 1 bis 15, **dadurch gekennzeichnet,**
**dass** zwei Kameras oder zwei Roboter zugleich oder nacheinander verwendet werden und die Ergebnisse des Verfahrens dazu verwendet werden, das Koordinatensystem der einen Kamera oder des einen Roboters auf das Koordinatensystem der anderen Kamera oder des anderen Roboters einzumessen.

17. Verfahren nach einem der Ansprüche 1 bis 17, **dadurch gekennzeichnet,**
**dass** zur Durchführung des Schrittes E) ein Bildverarbeitungsprogramm verwendet wird.

18. Verfahren nach einem der Ansprüche 1 bis 17, **dadurch gekennzeichnet,**
**dass** als Aufpunkte (A1,A2,A3) Oberflächenpunkte eines starren Körpers, insbesondere Würfel oder Quader, gewählt werden, welcher im Bildfeld der Kamera (K) angeordnet ist.

19. Verfahren nach einem der Ansprüche 1 bis 18, **dadurch gekennzeichnet,**
**dass** die Ergebnisse des Verfahrens dazu verwendet werden, Ungenauigkeiten und Fehler des Roboters (R) auszugleichen.

20. Verfahren nach einem der Ansprüche 1 bis 19, **dadurch gekennzeichnet,**
**dass** das Roboter-Koordinatensystem (RKS) ein kartesisches Koordinatensystem ist und/oder das Kamera-Koordinatensystem (KKS) ein kartesisches Koordinatensystem ist.
